# EUROPEAN PATENT SPECIFICATION

(11) **EP 1 808 075 B1**
(45) Date of publication and mention of the grant of the patent: **09.05.2018**
(21) Application number: 05790557.2
(22) Date of filing: 05.10.2005
(51) Int. Cl.: A23B 4/00, B65B 31/00, B65B 31/02, B65D 65/02, B65D 65/40, B65D 71/08, B65D 81/20, B65D 81/24, B65D 85/50

(54) **PACKAGE FOR LUMP OF MEAT HAVING VOID WITHIN THE INSIDE THEREOF AND METHOD FOR PRODUCTION THEREOF**
EINEN HOHLRAUM AUFWEISENDE VERPACKUNG FÜR FLEISCHSTÜCK UND HERSTELLUNGSVERFAHREN DAFÜR
EMBALLAGE POUR UNE PIECE DE VIANDE POSSEDANT UN VIDE A L'INTERIEUR DE CELLE-CI ET SON PROCEDE DE PRODUCTION

(30) Priority: 15.10.2004 JP 2004301916
(43) Date of publication of application: 18.07.2007
(73) Proprietor: Kureha Corporation, Chuo-ku, Tokyo 103-8552 (JP)
(72) Inventor: TANAKA, Mikio Polymer Processing &Products Research Laboratories, Omitama-shi Ibaraki 311-3436 (JP); YASUDA, Matsuo Polymer Processing&Products Research Laboratories, Omitama-shi Ibaraki 311-3436 (JP); AYAKI, Tsuyoshi Polymer Processing&Products Research Laboratories, Omitama-shi Ibaraki 311-3436 (JP)
(74) Representative: BRP Renaud & Partner mbB Rechtsanwälte Patentanwälte Steuerberater
(86) International application number: PCT/JP2005/018433
(87) International publication number: WO 2006/040973

(56) References cited:
- EP-A2- 1 055 371
- GB-A- 1 199 998
- GB-A- 2 152 897
- JP-A- 10 095 086
- JP-A- 52 047 945
- JP-A- 60 110 663
- JP-A- 63 307 078
- JP-A- 2000 153 590
- JP-A- 2003 159 761
- JP-A- 2004 142 752
- US-A1- 2004 047 957
- US-B1- 6 348 227

## Description

### Technical Field

The present invention relates to a package for a lump of meat having a void within an inside thereof, which is effective for maintaining quality of the meat and improving productivity thereof, and to a method of producing the package.

### Background Art

Conventionally, poultry (whole carcass) from which feathers and guts have been removed, fish meat in a semi-dress or dress form from which branchiae and guts have been removed, and the like are of ten packaged and commercially sold. Now, descriptions are made by taking as an example a whole carcass of a fowl of which investigations on processing and packaging techniques therefor are relatively proceeding.

Processing of meat of fowls such as chicken and turkey is generally performed in such a manner that a fowl is slaughtered, feathers are removed, the fowl is washed, and guts of the fowl are removed. The thus-processed meat of a fowl is then subjected to subsequent butchering or directly shipped as a "whole carcass". In a case where the whole carcass is distributed and sold in retail stores and supermarkets, the whole carcass generally is placed on a plastic tray made of polystyrene paper (PS), polypropylene (PP), or the like, and an upper portion of the whole carcass is then wrapped with a film of polyvinyl chloride (PVC), polyethylene (PE), or the like. This kind of packaging form is convenient, but has problems in that oxidation deterioration and growth of bacteria occur under cold storage conditions and that shelf life is limited to an extremely short period of time (2 to 3 days).

In addition, since the package is merely sealed by adhesion property of the film itself, indication is made that the packaging form has a problem in that meat juice leaks out from interspaces at a part where the tray and the film are superimposed and display spaces in the stores are smudged by the meat juice. Further, the plastic tray, especially a tray made of an expanded resin, is bulky, so difficulty in disposal after use thereof has been indicated. In addition, additional reduction in volume of the packaging material is demanded from a viewpoint of environmental conservation.

Meanwhile, a whole poultry is put in cold storage and distributed at approximately -10°C or lower to achieve long shelf lives. However, frozen products have a problem in that thawing of the frozen products when they are prepared for eating is cumbersome. In addition, inappropriate freezing and thawing treatment result in problems of an increase in drip due to collapse of meat tissues and deterioration in texture.

There are disclosed some findings regarding the techniques of storing poultry including the whole carcass.

JP-A-52-47945 discloses an improved method of and package for storing poultry including chicken and turkey for a long period of time without using conventional "packing in ice" or a quick freezing technique. That is, there is disclosed a method involving sealing and packaging poultry together with carbon dioxide gas by using a substantially gas-impermeable packaging material such as a soft compound container of nylon (NY) and Surlyn (ionomer manufactured by DuPont) so that growth of bacteria is inhibited by carbon dioxide generated by dissolution of the carbon dioxide gas in meat juice. The method recommends introducing about 10 to 12 in³ (about 163.8 to 196.6 ml) of carbon dioxide gas with respect to 1 pound (about 0.455 kg) of poultry to allow the inhibitory effect on the growth of bacteria to be sufficiently exerted and not to cause swelling which may evoke gas expansion due to putrefaction. In other words, the method recommends introducing the carbon dioxide gas having a volume (ml) corresponding to 36% to 43% of the weight (g) of poultry. In addition, the method describes that the poultry is housed at temperature of less than about 1.7°C, whereby putrefaction thereof can be suppressed for a long period of time of about 40 days. The storage method is intended for application to mainly storage for institutional use or distribution of poultry, but may be applied to "consumer packages of the whole poultry which can also cope with display selling". However, a package in the storage method has problems in that it has a significantly loose appearance because of inferior adhesion property between poultry and a packaging material, if not evoke expansion due to putrefaction, and that it lacks beauty as a final product.

JP-A-54-160774 discloses a method of storing fresh meat, including exchanging gas in a package with a gas mixture of oxygen and carbon dioxide gas, and storing the resultant at low temperature, whereby a period of time in which fresh meat retains bright red color thereof is lengthened and putrefaction caused by bacteria is prevented. Specifically, the method includes storing fresh meat such as chicken at low temperature in a gas atmosphere including 60 to 90% by volume of oxygen and 40 to 10% by volume of carbon dioxide gas concentration, the oxygen encompassing 50 mg/m³ or less of reductive gases such as carbon monoxide gas and nitrogen monoxide. In addition, the storage period of time of the fresh meat attained by the method is about 2 weeks, so it is thought that a packaging material is not particularly required to have oxygen shielding property. A characteristic feature of the method is that the reductive gases such as nitrogen monoxide and carbon monoxide are allowed to bind with myoglobin and hemoglobin in the fresh meat to form nitrosomyoglobin, nitrosohemoglobin, carbonyl myoglobin, or carbonylhemoglobin having extremely excellent color tone stability so that change in color of the meat can be prevented for a long period of time. However, the pigments formed by the binding with the reductive gases are too stable that theymay conceal bacterial deterioration (putrefaction). Actually, the reductive gases are used for the fresh meat only in few nations.

JP-A-2004142752 discloses a poultry product package which can prevent color development and deterioration of a raw poultry product and lengthen lifetime of the product. That is, there is described a poultry product package, including a sealed package in which chicken is housed in a container body having an expanded resin layer (outer layer), an oxygen gas barrier layer (intermediate layer), and a thermally adhesive resin layer (inner layer) and a flange portion on an opening of the container body, and the flange portion of the container body is subjected to heat adhesion with a container cover body having a base material layer (outer layer), an oxygen gas barrier layer (intermediate layer), and a thermally adhesive resin layer (inner layer) having anti-fogging property. In the poultry product package, an atmosphere in a sealed space has a gas mixture adjusted to have 50 to 80% by volume of oxygen gas, 20 to 40% by volume of carbon dioxide gas, and 0 to 20% by volume of nitrogen gas. It is emphasized that the package has excellent poultry quality retaining property, and fogging of the cover body is eliminated and a product appearance is thus improved by considering the fogging property of the cover body of the container. However, the package has problems in that the container body which essentially requires the expanded resin layer has bad disposal property and there is no improving effect with respect to the conventional simple tray wrapping packages.

In addition, to solve problems of a bad smell peculiar to chicken, expansion of a storage container due to expansion of a package, and high cost, JP-A-3-27244 discloses a package obtained by sealing poultry and a gas at least containing 20% by volume of carbon dioxide gas in a packaging container using a polyolef in-based resin having a carbon dioxide gas permeability of 1,000 to 12,000 cc/m²·24 hrs·atm. It is uncertain that the inhibitory effect of the carbon dioxide gas on the growth of bacteria can be attained with the carbon dioxide gas permeability defined for the package. In addition, there is fear that a chicken-like smell that has leaked out through the packaging container to an outer space of the package may transfer to other products and an odd smell may be retained in storage spaces for the package.

GB 1535113 describes a method of packaging fresh poultry for extended storage wherein pieces of fresh poultry are placed in a gas impermeable container, the container is vacuumized and carbon dioxide is introduced into the container before sealing.
GB 2152897 discloses a process of packaging meat in a heat-shrinkable plastics envelope comprising injecting a hot gas which is a mixture of steam and an inert gas into the envelope.
The inert gas employed can be carbon dioxide or nitrogen.

### Disclosure of the Invention

### Problem to be solved by the Invention

The present invention has been made to solve the above-mentioned problems of the prior art. That is, it is an object of the present invention to provide a package for food having a void within an inside thereof, which can solve the problems of an insufficient shelf life from a microbiological viewpoint, leak of meat juice to an outside of the package, and the like, which can provide a beautiful appearance as a package product, which is excellent in maintaining functional quality, and which can contribute to environmental conservation through reduction in volume of the packaging container, and a method of producing the package.

### Means for solving the Problems

In order to achieve the above-mentioned object, the inventors of the present invention have found a package for a lump of meat having a void within an inside thereof, including: a lump of meat having a void within an inside thereof; and a gas mixture of at least 2 kinds of gas, having a volume (ml) corresponding to 3% or more and 15% or less of a weight of the lump of meat and, after storage of the package at 3°C for 7 days, having a carbon dioxide gas concentration of 8% or more and 90% or less, and an oxygen concentration of 5% or more and 70 % or less, the lump of meat and the gas mixture being packaged in a tightly sealed manner (Invention 1).

In Invention 1 as described above, the volume of the gas mixture with respect to the lump of meat having a void within an inside thereof and the carbon dioxide gas concentration in the gas mixture are specified, whereby a volume of a package can be kept compact without causing deformation of the lump of meat having a void within an inside thereof, and a package for the lump of meat having a void within an inside thereof, having a beautiful product appearance can be obtained. Further, from a viewpoint of maintaining quality, microbiological deterioration and degeneration due to oxidation such as color change and oxidized flavor of the lump of meat can be effectively suppressed. In addition, leak of meat juice from the inside of the package to the outside thereof can also be prevented.

Note that the terms "carbon dioxide gas concentration" and "oxygen concentration" in the gas mixture as used herein indicate those obtained after at least 1 day from production of the package as in Invention 1.

In Invention 1, the carbon dioxide gas and oxygen concentration are specified, whereby hemoglobin and myoglobin in the lump of meat bind with oxygen to produce bright red oxyhemoglobin and oxymyoglobin to an extent that oxidation deterioration does not occur. Accordingly, there can be produced a package for a lump of meat having a void within an inside thereof, having a beautiful product appearance with an image of good freshness.

Further, the present invention relates to a package for a lump of meat having a void within an inside thereof according to Invention 1, in which the lump of meat having a void within an inside thereof is obtained by removing feathers and guts from one fowl selected from the group consisting of chicken, turkey, duck, and goose (Invention 2).

The present invention also relates to a package for a lump of meat having a void within an inside thereof according to any one of Inventions 1 and 2, in which the lump of meat having a void within an inside thereof and the gas mixture are packaged in a tightly sealed manner in close contact with a packaging material (Invention 3). By the above-mentioned constitution of the present invention, there can be produced a package for a lump of meat having avoid within an inside thereof, having a beautiful product appearance, in which the packaging material does not press and deform the lump of meat and which is fit along the shape of the lump of meat.

The present invention also relates to a package for a lump of meat having a void within an inside thereof according to Invention 3, in which the packaging material is a heat-shrinkable film (Invention 4). By selecting the heat-shrinkable film as the packaging material, there can be obtained the package for a lump of meat having a void within an inside thereof of Invention 3 by a simple and inexpensive method such as heating.

The present invention also relates to a package for a lump of meat having a void within an inside thereof according to Invention 4, in which the heat-shrinkable film has a shrinkage at 90°C of 15% or more (Invention 5). By setting the shrinkage of the heat-shrinkable film at 90°C to 15% or more, there can be produced the package for a lump of meat having a void within an inside thereof according to Invention 4, in which the packaging material is well adhered to the lump of meat.

The present invention also relates to a package for a lump of meat having a void within an inside thereof according to any one of Inventions 1 to 5, in which the packaging material has an oxygen gas permeability at 23°C and 80% RH of 200 ml/m²·day·atm or less (Invention 6). In the present invention, the oxygen gas permeability of the packaging material is defined as described above, whereby the gas mixture packaged in a tightly sealed manner together with the lump of meat having a void within an inside thereof can maintain the carbon dioxide gas concentration and the volume as described in Invention 1 for a long period of time. Accordingly, there can be produced a package for a lump of meat having a void within an inside thereof, which can maintain a beautiful appearance and quality for a long period of time.

The present invention also relates to a packaging material for use in a package for a lump of meat having a void within an inside thereof, including at least a material including a layer formed of polyamide and a layer formed of polyolefin (Invention 7). By using the packaging material formed of the material as described in Invention 7, there can be produced a package having excellent strength and sealing property. In addition, the carbon dioxide gas concentration can be maintained for a long period of time as described above, and the beautiful appearance and quality can be maintained without changing the shape of the lump of meat having a void within an inside thereof.

In addition, the present invention relates to a method of producing a package for a lump of meat having a void within an inside thereof, including: tightly sealing a lump of meat having a void within an inside thereof and a gas mixture of at least 2 kinds of gas, having a volume (ml) corresponding to 3% or more and 30% or less of a weight of the lump of meat and a carbon dioxide gas concentration of 15% or more and 91% or less and an oxygen concentration of 4% or more and 75% or less with a packaging material; and subj ecting the packaging material to heat shrinkage at an ambient temperature of 75 °C or more (Invention 8) . Apart of the gas mixture sealed in the package is absorbed by or dissolved in the lump of meat as time passes, so the volume of the gas mixture thus decreases and the gas composition changes. According to experiments, the inventors of the present invention have concluded that it is preferable to set the volume of the gas mixture and the carbon dioxide gas concentration upon packaging within the above-mentioned ranges in order to achieve the preferable ranges of the volume of the gas mixture and the carbon dioxide gas concentration in Invention 1.

Further, the present invention relates to a method of producing a package for a lump of meat having a void within an inside thereof according to Invention 8, in which the packaging material is a heat-shrinkable film (Invention 9).

### Effects of the Invention

According to the present invention, a volume of a package can be kept compact without causing deformation of a lump of meat having a void within an inside thereof, and biological changes, generation of smell, and color change during storage can be prevented.

### Brief Description of the Drawings

FIGS. 1 to 7 show longitudinal sectional views of packages for a lump of meat having a void within an inside thereof of the present invention.
FIG. 1 shows a longitudinal sectional view of a package for a lump of meat having a void within an inside thereof.
FIG. 2 shows a longitudinal sectional view of a package for a lump of meat having a void within an inside thereof, in which a water absorptive material is inserted.
FIG. 3 shows a package for a lump of meat having a void within an inside thereof, which is subjected to deep drawing (plane of a cover material).
FIG. 4 shows a package for a lump of meat having a void within an inside thereof, which is subjected to deep drawing (deep drawing in both of a cover material and a base material).
FIG. 5 shows a package having a lump of meat having a void within an inside thereof placed in a packaging product formed in a bag shape.
FIG. 6 shows a package having a lump of meat having a void within an inside thereof placed in a packaging product formed in a bag shape and whose opening is converged and sealed.
FIG. 7A shows a package obtained by forming a flat film into a tube-like shape, inserting a tray, and placing a lump of meat having a void within an inside thereof on the tray.
FIG. 7B shows a front view of the package of FIG. 7A seen from the bottom thereof.

### Description of Symbols

1: package for lump of meat having avoid within inside thereof
2: packaging material
3: lump of meat having a void within inside thereof
4: void
21: package for lump of meat having a void within inside thereof
22: lump of meat having a void within inside thereof
23: void
24: water absorptive material
31: packaging material (base material)
32: packaging material (cover material)
33: lump of meat having a void within inside thereof
34: void
41: packaging material (base material)
42: packaging material (cover material)
43: lump of meat having a void within inside thereof
44: void
45: thermal adhesion portion of packaging material
51: packaging material
52: lump of meat having a void within inside thereof
53: void
54: thermal adhesion portion of packaging material (opening)
61: packaging material
62: lump of meat having a void within inside thereof
63: void
64: convergence sealing portion
71: packaging material
72: lump of meat having a void within inside thereof
73: void
74: tray
75: thermal adhesion portion of packaging material

Hereinafter, embodiments of the present invention will be described by referring to drawings.

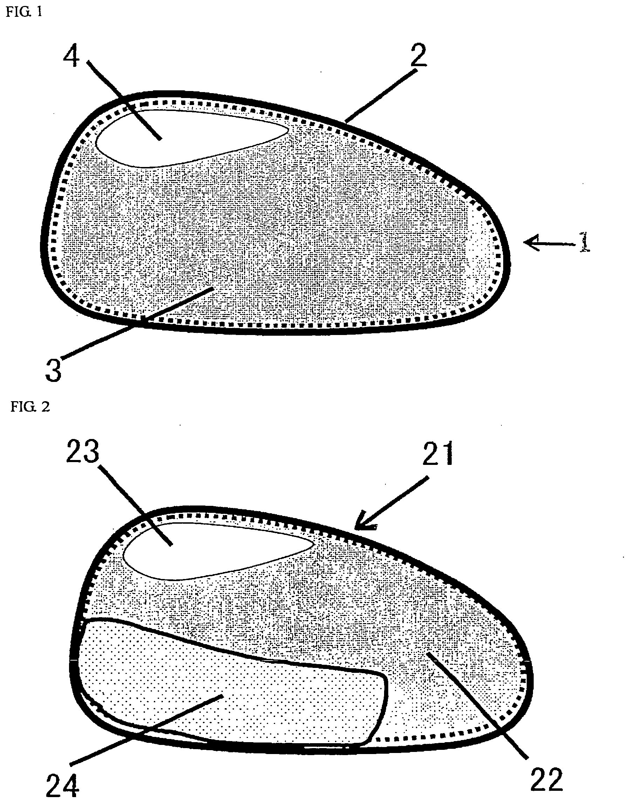

FIG. 1 shows an example of a package for a lump of meat having a void within an inside thereof of the present invention. In FIG. 1, reference numeral 1 denotes a package for a lump of meat having a void within an inside thereof, reference numeral 2 denotes a packaging material, reference numeral 3 denotes a lump of meat having a void within an inside thereof, and reference numeral 4 denotes a void present within an inside of the lump of meat. The package for a lump of meat having a void within an inside thereof 1 includes the packaging material 2 and the lump of meat having a void within an inside thereof 3. In the package for a lump of meat having a void within an inside thereof 1, a gas mixture is sealed in the void portion 4 and a head space portion except the lump of meat 3. Note that the void 4 may or may not have an opening on a surface of the lump of meat 3. The number of the opening is not limited to 1, and 2 or more openings may be present.

The volume of the gas mixture in the package for a lump of meat having a void within an inside thereof corresponds to 3% or more and 15% or less of the weight (g) of the lump of meat (for example, in a case where the lump of meat has a weight of 1,000 g, the volume of the gas mixture is 30 ml or more and 150 ml or less). The volume of the gas mixture corresponds to preferably 4% or more and 12% or less, and most preferably 4% or more and 10% or less of the weight (g) of the lump of meat. The term "volume of gas mixture in package" as used herein refers to a value obtained by: immersing the package in water; opening a hole with a needle on the package in water; compressing the package by hand; and collecting gas that has leaked out from the hole with a measuring cylinder to measure the volume thereof. Note that the term "volume of gas" as used herein refers to a value measured under a normal state at about 0°C under atmospheric pressure or a value converted from that measured at other temperatures. The volume (ml) measured as described above is divided by the weight (g) of the lump of meat to determine a percentage of a ratio of the volume (ml) of the gas mixture to the weight (g) of the lump of meat. A volume of the gas mixture of less than 3% of the weight (g) of the lump of meat having a void within an inside thereof is not preferable because deformation of the lump of meat or leak of meat juice due to reduced pressure are promoted. In addition, a volume of the gas mixture exceeding 15% of the weight (g) of the lump of meat is not preferable because a packaging material does not fit well with the lump of meat, resulting in a loose appearance. Note that it is often the case that a volume of a void portion in a lump of meat having a void within an inside thereof before seal packaging is larger than a preferable range of the volume of the gas mixture. In other words, the deformation preventing effect of the gas mixture upon seal packaging is thought to be exerted due to a fact that a mixture gas having a volume within a preferable range, which is packaged and sealed, reduces the volume of the void and maintain the reduced volume to an extent that the whole lump of meat does not deform. Thus, the preferable rang of the volume of the gas mixture cannot be easily estimated by only the volume of the void portion of the lump of meat having a void within an inside thereof.

In addition, the carbon dioxide gas concentration of the gas mixture is preferably 8% or more and 90% or less, and more preferably 10% or more and 80% or less. The carbon dioxide gas concentration of the gas mixture as used herein is determined by gas chromatography. When the carbon dioxide gas concentration of the gas mixture is within the preferable ranges, growth inhibiting effect (bacteriostatic effect) of the carbon dioxide gas on bacteria is exerted, whereby microbiological deterioration such as putrefaction or the like of food having a void within an inside thereof can be delayed. A carbon dioxide gas concentration of less than 8% is not preferable because the bacteriostatic effect of the carbon dioxide gas cannot be obtained, resulting in putrefaction in early stages. In addition, a carbon dioxide gas concentration exceeding 90% is not preferable because color development of a lump of meat when a package is opened is bad and the appearance is deteriorated. Note that preferable examples of the gas to be used in the gas mixture except the carbon dioxide gas include nitrogen, oxygen, and argon.

In addition, after storage of the package at 3°C for 7 days the gas mixture has a carbon dioxide gas concentration of 8% or more and 90% or less and an oxygen concentration of 5% or more and 70% or less, more preferably, a carbon dioxide gas concentration of 10% or more and 80% or less and an oxygen concentration of 5% or more and 70% or less. The oxygen gas concentration in the gas mixture as used herein is determined by gas chromatography. When the carbon dioxide gas concentration and oxygen concentration in the gas mixture are within the preferable ranges, hemoglobin and myoglobin which are present near a surface of a lump of meat having a void within an inside thereof bind with oxygen to form oxyhemoglobin and oxymyoglobin which are bright red. Accordingly, there can be produced a product with a good appearance having a bright color developed thereon even before a sealed package is opened.

In a case of packages using gas mixture of oxygen and other gas, which are applied to beef stake meat, minced meat, and the like, a gas having a volume corresponding to about 50 to 200% of the weight (g) of a content is generally sealed. When the oxygen concentration in the gas mixture exceeds 60%, bright color development is observed owing to production of oxymyoglobin at early stages of storage. However, after storage in cold storage for 4 to 5 days, oxidation deterioration caused by excessive oxygen becomes dominant, making the content inedible. However, in the present invention, even when the gas mixture packaged and sealed together with a lump of meat having a void within an inside thereof has a high oxygen concentration of about 70%, there was observed no oxidation deterioration at early stages as in the gas packaging applied to beef and the like. It is interpreted that the package for a lump of meat having a void within an inside thereof of the present invention has a gas mixture packaged and sealed having an extremely small volume corresponding to 3% or more and 15% or less of the weight (g) of the lump of meat, and the amount of oxygen present in the package is small even when the oxygen concentration in the gas mixture is high, so oxidation deterioration does not occur.

In addition, the lump of meat having a void within an inside thereof is preferably selected from lumps of meat of fowls such as chicken, turkey, duck, and goose, from each of which feathers and guts have been removed. A void portion left after the removal of the guts corresponds to "void" of a lump of meat having a void within an inside thereof. In many cases, those fowls are distributed and consumed in a state of whole carcasses from each of which feathers and guts have been removed, and quality maintaining performance, product appearance, and easiness in disposal for the fowls have not been satisfied by the conventional techniques, so the package of the present invention can preferably be applied thereto. Note that the lump of meat having a void within an inside thereof of the present invention is not limited to the fowls. Preferable examples of the lump of meat include fish meat in states of dress and semi-dress, having a void portion obtained by removing gills and guts. In addition, preferable examples thereof further include meat such as rabbit meat, goat meat, pork, and beef obtained by slaughtering the animals, peeling skins thereof, and removing guts thereof. In addition, the lump of meat may be unheated or heated. Further, the lump of meat may be unfrozen or frozen.

In addition, it is preferable that the lump of meat having a void within an inside thereof and the gas mixture are packaged and sealed in close contact with a packaging material. The sealed package of the close contact type has advantages in that excessive spaces are not required upon display selling and transfer, and a package having improved fitness property and excellent appearance can be obtained. In addition, in the sealed package of the close contact type, when meat juice leaks out from the lump of meat, the meat juice hardly spreads throughout the lump of meat, whereby deterioration in appearance due to the meat juice and propagation of bacteria via the meat juice can be suppressed.

For the packaging material, various films containing plastic can preferably be used. Materials for the plastic include polyester-based plastic, polyamide-based plastic, polyethylene-based plastic, polypropylene-based plastic, an ionomer, a copolymer of ethylene and vinyl acetate, polyvinyl chloride, polyvinylidene chloride, polyvinyl alcohol, a copolymer of ethylene and vinyl alcohol, and polyglycolic acid, and any one of them or a combination of two or more of them can be used. In addition, an aluminum foil, a deposited layer formed of an inorganic compound and/or a metal compound, poly (meth) acrylic resin coating layer, or the like can be imparted to the film. In addition, the packaging material may be transparent or may have a light shielding property through coloring or the like. In a case where the meat juice easily leaks out from the lump of meat, beauty of the package may deteriorate if the meat juice is visible. Thus, a portion where the meat juice is apt to be retained or the like can be concealed by a packaging material having a light shielding property.

In addition, heat-shrinkable films can preferably be used as the packaging material. The material of the heat-shrinkable film is not particularly limited. However, materials similar to the plastic exemplified in the above-mentioned description regarding the packaging material can be used. The use of a heat-shrinkable film as a packaging material has an advantage in that the packaging material shrinks by simple treatment, that is, heat treatment, so that the packaging material is brought into close contact with a lump of meat having a void within an inside thereof, whereby the sealed packaged of the close contact type is obtained.

In addition, the heat-shrinkable film has a shrinkage at 90°C of preferably 15% or more, more preferably 20% or more, and most preferably 25% or more. However, in a case where a lump of meat having a void within an inside thereof is packaged and sealed by using 2 or more kinds of packaging materials having different materials or constitutions, at least 1 kind of the packaging materials mayhave the heat shrinkage, and other kinds of the packaging materials may not necessarily have the heat shrinkage. For example, assuming that a lump of meat having a void within an inside thereof is placed on a tray and 2 kinds of films for a cover material and a base material are used for deep drawing packaging, one of the cover material and the base material may have the heat shrinkage as described above. The term "heat shrinkage" as used herein is a maximum value obtained by a formula (length of linear line before heating - length of linear line after heating)/length of linear line before heating x 100 (%) after a linear line having a length of 100 mm is inscribed on a film before heating, the film is heated for 10 seconds in hot water of 90°C, and lengths of the linear lines before and after heating are measured. Use of the film having the above-mentioned heat shrinkage allows a packaging material to be brought into close contact with the lump of meat by mild heat treatment to an extent that deterioration of the surface of the lump of meat does not occur. The material for the heat-shrinkable film is not particularly limited. However, materials similar to the plastic exemplified in the above description regarding the package can be used. A uniaxially or biaxially stretched film in a step of producing a film may preferably be used.

In addition, the packaging material has an oxygen gas permeability at 23°C and 80% RH of preferably 200 ml/m²·day·atm or less, more preferably 150 ml/m²·day·atm or less, further more preferably 100 ml/m²·day·atm or less, and most preferably 60 ml/m²·day·atm or less. Use of a packaging material having an oxygen gas permeability as described above can maintain the volume and gas composition of the gas mixture which are preferable in the present invention for a long period of time, and thus is preferable for obtaining the effects of the present invention.

In addition, for the package of the present invention, it is particularly preferable to use a packaging material to be used for a package for a lump of meat having a void within an inside thereof, which includes at least a material including a layer formed of polyamide and a layer formed of polyolefin. Examples of the polyamide-based resin include: aliphatic polyamide polymers such as nylon 6, nylon 11, nylon 12, nylon 69, nylon 610, and nylon 612; and aliphatic polyamide copolymers such as nylon 6/66, nylon 6/610, and nylon 6/12. Of those, nylon 6/66 and nylon 6/12 are particularly preferable from a viewpoint of formability. Any one of the aliphatic polyamide polymers and copolymers can be used alone, or two or more of them can be used as a mixture. In addition, there may be used a blend of the aliphatic polyamide polymer or copolymer as a main component with an aromatic polyamide. Examples of the blend include: a blend of an aliphatic nylon such as nylon 6/610/MXD6 (polymetaxylylene adipamide) with an aromatic polyamide containing an aromatic diamine unit; and a blend of an aliphatic nylon such as nylon 66/69/61, nylon 6/61, or nylon 6I/6T with an aromatic polyamide copolymer containing an aromatic carboxylic acid unit. By using the polyamide-based resin, there can be obtained a packaging material which is excellent in gas barrier property and strength. The thickness of the polyamide-based resin layer is not particularly limited. However, it is preferable to use a polyamide-based resin layer having a thickness of about 5 µm or more and 100 µm or less. It is more preferable that the thickness be 5 µm or more and 50 µm or less from viewpoints of flexibility and handling property. In addition, examples of the polyolefin-based resin include polyolefins obtained by polymerization using a single site catalyst or a metallocene catalyst, such as linear low density polyethylene (SSC-LLDPE), linear very low density polyethylene (SSC-VLDPE), conventional ethylene-α-olefin copolymers (generally referred to as LLDPE, VLDPE, or the like), ethylene-vinyl acetate copolymer (EVA), ethylene-methacrylic acid copolymer (EMAA), an ethylene-methacrylic acid-unsaturated aliphatic carboxylic acid copolymer, low density polyethylene, ionomer resins, an ethylene-acrylic acid copolymer, an ethylene-methyl acrylate copolymer (EMA), an ethylene-ethyl acrylate copolymer (EEA), and an ethylene-butyl acrylate copolymer (EBA). By using the polyolefin-based resins, the sealed package of the present invention can be achieved by a simple measure, that is, heat adhesion. In addition, the polyolefin-based resins can preferably be used for a film on an inner surface (lump of meat side) when the package of the present invention is formed.

In addition to the polyamide-based resins and polyolef in-based reins, there can be used at least one material selected from the group consisting of polyester-based resins, polyvinyl alcohols, ethylene-polyvinyl alcohol copolymers (EVOH), polyvinyl chloride, polyvinylidene chloride, aluminum foils, films on which an inorganic substance such as silicon oxide or aluminum oxide is deposited, acrylic acid-based barrier coating film, paper, and the like, whereby barrier property against oxygen and water vapor, printability, physical strength, and the like canbe imparted to apackagingmaterial so that practicality of the package of the present invention can be more preferably improved. Examples of a laminated packaging material include: polyamide/LLDPE, polyamide/VLDPE, polyamide/EVA, polyamide/EVOH/LLDPE, polyethylene terephthalate/polyamide/EVOH/VLDPE, polyethylene terephthalate/polyamide/EVOH/LLDPE, polyethylene terephthalate/polyamide/VLDPE, polyethylene terephthalate/polyamide/LLDPE, copolyester (co-PET)/polyamide/EVOH/VLDPE, co-PET/polyamide/EVOH/LLDPE, co-PET/polyamide/VLDPE, co-PET/polyamide/LLDPE, and polyamide/polyolefin/polyamide from the outer side of a package.

In the method of producing a package of the present invention, it is preferable that: a lump of meat having a void within an inside thereof be sealed together with a gas mixture of at least 2 kinds of gas, having a volume corresponding to 3% or more and 30% or less of a weight (g) of the lump of meat and a carbon dioxide gas concentration of 15% or more and 91% or less by using a packaging material; and the packaging material be subjected to heat shrinkage at an ambient temperature of 75 °C or more. As described in the "Means for solving the Problems" section, the amount of the enclosed gas mixture and the concentration of carbon dioxide gas of the package are set within the above-mentioned ranges, whereby the volume and the gas composition of the gas mixture which are preferable in the package of the present invention can be achieved. In addition, after the lump of meat and the gas mixture are sealed by the packaging material, the packaging material is then be shrunken at an ambient temperature of 75°C, and a sealed package of a close contact type can thus be obtained. Note that the ambient temperature for the heat shrinkage of the packaging material is preferably 75°C or more, more preferably 80°C or more, and most preferably 85°C or more. The package can be shrunken in a short period of time at the ambient temperature within the above-mentioned range, and the deterioration of the lump of meat due to heating can thus be prevented. A method of attaining an ambient temperature of 75 °C or more is not particularly limited. There can be used methods involving immersing in hot water, applying hot air (exposing to hot air), showering, applying vapor (exposing to vapor, and the like at respective predetermined temperatures. The methods allows continuous treatment in a packaging step by providing a boiling tank, a hot-air tunnel, and a hot water showering tunnel. Note that the upper limit of the heating condition is not particularly defined. However, in a case where the lump of meat having a void within an inside thereof is an unheated product such as a fresh whole chicken carcass or fresh fish, risks of degeneration and deterioration due to heating on the surface of a content increases when the ambient temperature exceeds 100°C even if the treatment time is short. Thus, the ambient temperature of 100°C or less is generally preferable.

In the package of the present invention, a water absorptive material can be sealed in addition to the lump of meat having a void within an inside thereof and the gas mixture. FIG. 2 shows an example of the package 21 of the present invention sealed together with a water absorptive material 24. By inserting the water absorptive material into an appropriate position, meat juice leaked out from the lump of meat 22 is absorbed by the water absorptive material so that the meat juice hardly spreads throughout the lump of meat, whereby deterioration in appearance due to the meat juice and propagation of bacteria via the meat juice can be suppressed. For the form of the water absorptive material, one formed into a filmorasheetis readilyused. The material for the water absorptive material is not particularly limited, but any one of starch-based materials, cellulose-based materials, or synthetic resin-based materials such as polyacrylate-based materials, polyvinyl alcohol-based materials, polyacrylamide-based materials, and polyoxyethylene-based materials can be used alone, or two or more of them can be used in combination. In addition, it is more preferable in a hygienic viewpoint to stack a non-water absorptive film through which the meat juice may permeate, for example, a plastic film having holes, on a surface of the water absorptive material being brought into contact with the lump of meat because the meat juice absorbed by the water absorptive material is hardly brought into contact with the lump of meat. Further, an inhibitory effect on growth of bacteria on the lump of meat can be expected by adding antibacterial substances such as a Japanese horseradish extract and hinokithiol to the water absorptive material.

In the package of the present invention, a deoxidant may be packaged and sealed in addition to the lump of meat having a void within an inside thereof and the gas mixture. In a case where a deoxidant is inserted, the insertion has to be performed in consideration that the volume of the gas mixture after oxygen therein has been removed is maintained within the above-mentioned preferable range defined in the present invention. The sealing of the deoxidant is effective for removing oxygen which invades from the outside of the package, whereby the preferable gas composition range defined in the present invention is apt to be maintained even when the oxygen invades from the outside. The material of the deoxidant is not particularly limited, but there can be used a deoxidant of iron-based, ascorbic acid-based, or the like.

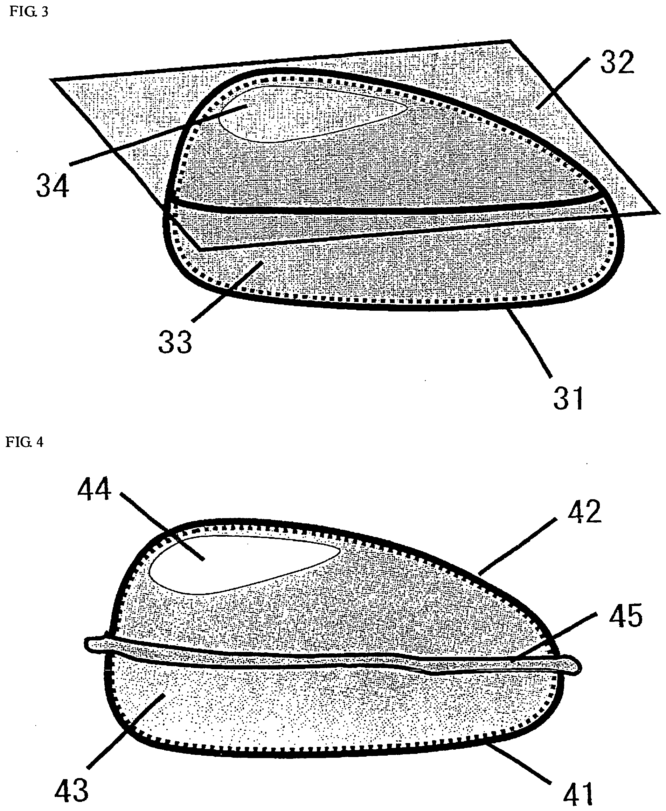

FIG. 3 shows an example of deep drawing packaging of the package of the present invention. The package is produced by using a deep drawing gas exchange packaging machine in such a manner that: a packaging material (base material) 31 is formed into a tray shape in advance; a lump of meat 33 having a void 34 is placed on the packaging material (base material) 31; a predetermined gas mixture is enclosed in a gas exchange chamber under reduced pressure; another packaging material (cover material) 32 is stacked on the lump of meat; both of the packaging materials are subjected to heat adhesion. FIG. 4 is similar to the above-mentioned deep drawing packaging except that both of the packaging materials are formed into tray shapes having appropriate depths instead of one of the base material and the cover material, and a lump of meat 41 having a void 44 within an inside thereof and a gas mixture are packaged and sealed by a similar step to the step in which the deep drawing gas exchange packaging machine is used. In the packaging form as shown in FIG. 4, both of the base material and the cover material are formed by deep drawing, so the base material and the cover material have an advantage in that they can be applied to a large lump of meat even when the base material and the cover material have relatively shallow drawing shapes. Note that in the package forms as shown in FIGS. 3 and 4, a tray can be inserted in the package in addition to the lump of meat having a void within an inside thereof. The insertion of a tray has a demerit that easiness in disposal of a packaging material is impaired, but has merits of distribution and selling such that the package is easily aligned and arranged in selling spaces, and the package has an appearance similar to the conventional tray wrapping packages and therefore consumers are less cautious about the novel packaging form. Thus, the presence or absence of the tray may be appropriately selected. The material of the tray is not particularly limited, but plastic trays made of polystyrene, polystyrene paper, polypropylene, and the like can preferably be used.

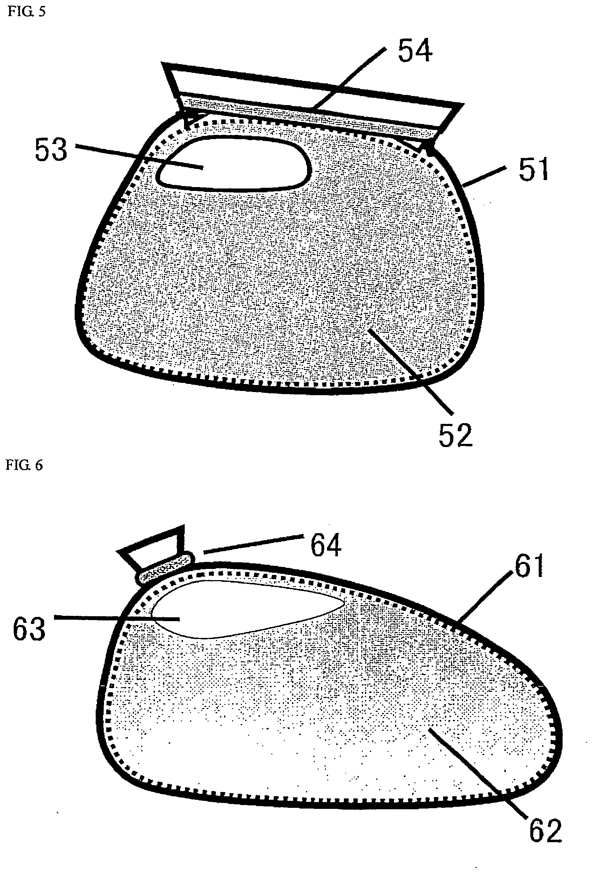

FIG. 5 shows a package obtained by: putting a lump of meat 52 having a void 53 within an inside thereof in a packaging material 51 formed into a bag shape; evacuating air from an inside of the bag and sealing a gas mixture therein by using a chamber type gas exchange packaging machine or the like; and subjecting an opening 54 to heat adhesion. FIG. 6 shows the same package as shown in FIG.5 except that the package is produced by a sealing method involving converging an opening 64 with an aluminum wire, a plastic tie, or the like. Any one of the packaging forms can be used for the package of the present invention.

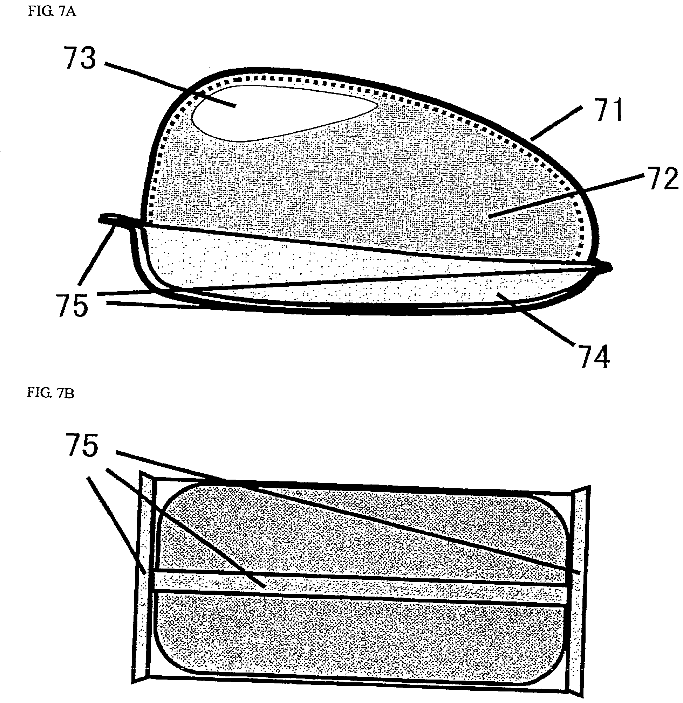

FIG. 7A shows an example of a package obtained by sealing and packaging a lump of meat 72 having a void 73 within an inside thereof and a gas mixture in a packaging material 71 formed into a tube shape. FIG. 7A shows a package in which a tray 74 is inserted therein, but the insertion of the tray is not essential. Note that the package as shown in FIG. 7A can be continuously produced by a method involving housing the lump of meat in the tube-like packaging material by using a pillow packaging machine and subjecting the whole to gas mixture exchange and sealing.

Note that reference numeral 75 denotes a thermal adhesion portion of the packaging material. In addition, FIG. 7B is a view of the package as shown FIG. 7A seen from the bottom thereof.

The packages as shown in FIGS. 3 to 7 are preferable embodiments of the package of the present invention. However, the present invention is not limited to those.

### Best Mode for carrying out the Invention

### (Examples 7 to 14) (Gas composition)

In a pouch (packaging material: polyethylene terephthalate (PET)/nylon (Ny)/ethylene-vinyl alcohol copolymer (EVOH)/very low density polyethylene (VLDPE) (total thickness of 40 µm) (oxygen gas permeability: 20 ml/m²·day·atm at 23°C, 80% RH)) produced to have a size of a width of 230 mm and a length of 350 mm, a fresh whole chicken carcass (fresh broiler chicken from which feathers and guts were removed (within 24 hours after slaughter), weight of about 2 kg) was put, and the fresh whole chicken carcass was subjected to gas packaging by using a predetermined gas mixture.

Note that an amount of the enclosed gas upon the gas packaging was adjusted so that the gas had a volume (ml) corresponding to 7 to 11% of a weight (g) of the content 1 day after the packaging. The resultant package was put in a refrigerator and kept in cold storage at 3°C for 1 day, and then appearance of the whole chicken carcass before the package was opened was evaluated. Subsequently, the package was put and kept in cold storage at 3°C for 6 days, and the gas composition in an inside of the package, appearance of the whole chicken carcass after the package was opened, smell, and a number of bacteria on a surface of the whole chicken carcass were measured.

For the appearance, 4 panelists visually observed the package under a fluorescent lamp 1 day after the storage at 3°C (before opening) and 7 days after the storage at 3°C (after opening), and evaluated it according to the following criteria.

Evaluation criteria; 5: extremely good with pale red to pink color of surface of chicken, 4: slightly dim color tone, but with no practical problem, 3 : pale brown color change (leading to a problem), 2: considerable color change, 1: significant color change

For the smell, 4 panelists smelled the content after the package was opened, and evaluated the smell according to the following criteria.

Evaluation criteria; 5: almost no smell, 4: slight smell but with no practical problem, 3: moderate smell (leading to a problem), 2: considerable smell, 1: significant smell

For the number of bacteria, a certain area of 25 cm² on the content was wiped out after the package was opened, and the number of the bacteria adhered thereon was determined. That is, the surface of the broiler chicken (upper surface of 25 cm² of a void from which guts were removed) was wiped out with gauze soaked with a sterilized physiological saline. Components wiped out therefrom were cultured at 30°C for 72 hours by the pour plate method using a standard agar medium, and the number of colonies emerged on a flat plate was counted. It was judged that there was a problem when the number of the bacteria exceeded 10⁶ per 25 cm³. Table 1 shows the results thereof with those of Comparative Examples.

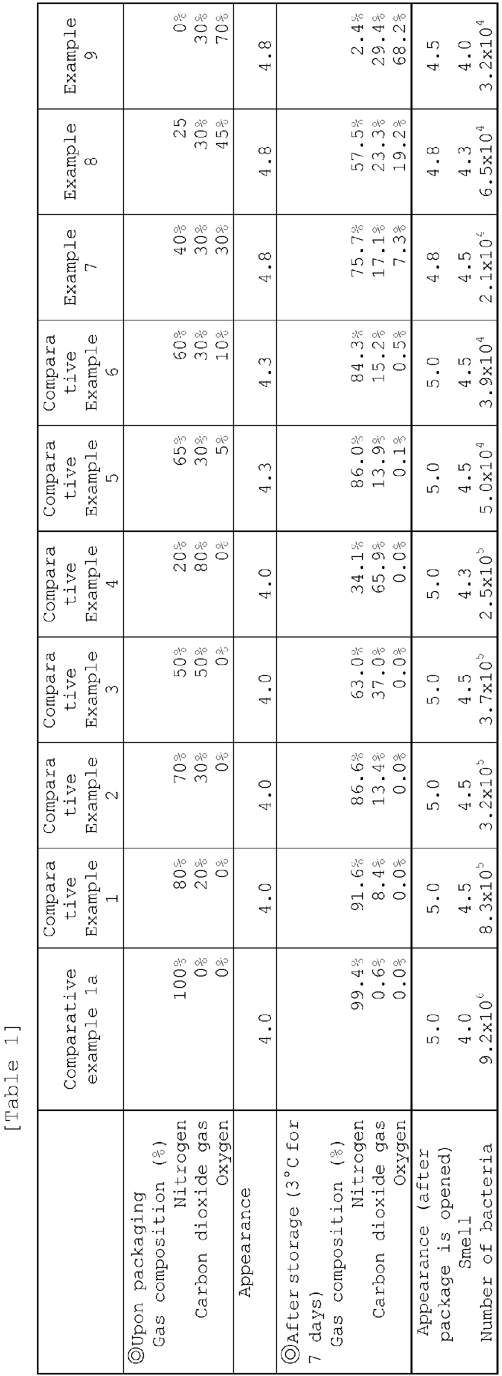

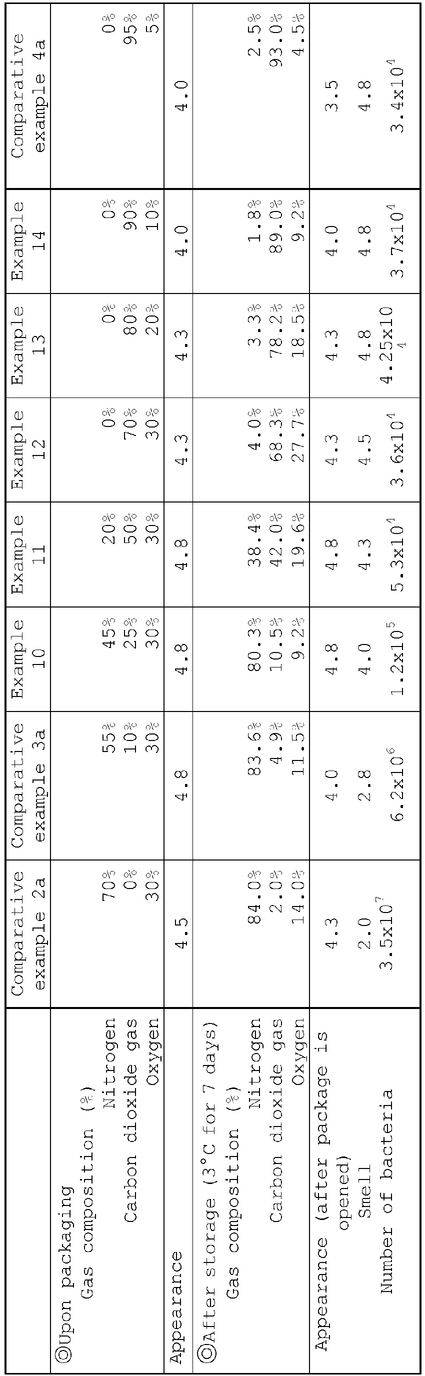

### (Examples 15 to 17) (Types of whole poultry)

In a pouch (packaging material: copolyester (co-PET)/nylon (Ny)/ethylene-vinyl alcohol copolymer (EVOH)/very low density polyethylene (VLDPE) (total thickness of 40 µm) (oxygen gas permeability: 20 ml/m²·d·atm at 23°C, 80% RH)) produced to have 3 edges thereof closed, fresh chicken (1.8 kg) (Example 15), duck (2.1 kg) (Example 16), and turkey (6.0 kg) (Example 17) from each of which feathers and guts were removed (within 24 to 48 hours after slaughter) were put, respectively, and they were each subjected to gas packaging by using a gas mixture of 70% oxygen and 30% carbon dioxide gas.

Note that an amount of the enclosed gas upon the gas packaging was adjusted so that the gas had a volume (ml) corresponding to 9 to 12% of the content weight (g) 1 day after the packaging. The resultant package was put in a refrigerator and kept in cold storage at 3°C for 1 day, and then appearance of the whole poultry before the package was opened was evaluated. Subsequently, the package was put and kept in cold storage at 3°C for 6 days, and the gas composition in an inside of the package, appearance of the whole poultry after the package was opened, smell, and a number of bacteria on a surface of the whole poultry were measured.

For the appearance, 4 panelists visually observed the package under a fluorescent lamp 1 day after the storage at 3°C (before opening) and 7 days after the storage at 3°C (after opening), and evaluated it according to the following criteria.

Evaluation criteria; 5: extremely good with pale red to red color of surface of lump of meat, 4: slightly dim color tone, but with no practical problem, 3: pale brown color change (leading to a problem), 2: considerable color change, 1: significant color change

For the smell, 4 panelists smelled the content after the package was opened, and evaluated the smell according to the following criteria.

Evaluation criteria; 5: almost no smell, 4: slight smell but with no practical problem, 3: moderate smell (leading to a problem), 2: considerable smell, 1: significant smell

For the number of bacteria, a certain area of 25 cm² on the content was wiped out after the package was opened, and the number of the bacteria adhered thereon was determined. That is, the surface of each of the lumps of meat (upper surface of 25 cm² of a void from which guts were removed) was wiped out with gauze soaked with a sterilized physiological saline. Components wiped out therefrom were cultured at 30°C for 72 hours by the pour plate method using a standard agar medium, and the number of colonies emerged on a flat plate was counted. It was judged that there was a problem when the number of the bacteria exceeded 10⁶ per 25 cm³. Table 2 shows the results thereof with those of Comparative Examples.

**[Table 2]**

| | Example 15 | Example 16 | Example 17 |
|---|---|---|---|
| ⊚Content | Chicken | Duck | Turkey |
| ⊚Upon packaging | | | |
| Gas composition (%) | | | |
| Nitrogen | 0% | 0% | 0% |
| Carbon dioxide gas | 30% | 30% | 30% |
| Oxygen | 70% | 70% | 70% |
| Appearance | 4.5 | 4.5 | 4.5 |
| ⊚After storage (at 3°C in 7 days) | | | |
| Gas composition (%) | | | |
| Nitrogen | 11.9% | 14.5% | 15.2% |
| Carbon dioxide gas | 29.0% | 31.0% | 32.9% |
| Oxygen | 59.1% | 54.5% | 51.9% |
| Appearance (after package is opened) | 4.5 | 4.5 | 4.5 |
| Smell | 4.0 | 4.0 | 4.0 |
| Number of bacteria | 6.2x10³ | 4.1x10⁴ | 8.9x10⁴ |

### (Examples 18 to 24) (Head space)

In a pouch (packaging material: polyethylene terephthalate (PET)/nylon (Ny)/ethylene-vinyl alcohol copolymer (EVOH)/very low density polyethylene (VLDPE) (total thickness of 40 µm) (oxygen gas permeability: 20 ml/m²·day·atm at 23°C, 80% RH)) produced to have a size of a width of 230 mm and a length of 350 mm, a fresh whole chicken carcass (fresh broiler chicken from which feathers and guts were removed (within 24 hours after slaughter), weight of about 2 kg) was put, and the fresh whole chicken carcass was subjected to gas packaging by using a gas mixture of 40% nitrogen, 30% carbon dioxide gas, and 30% oxygen with a Multivac AGW type gas exchange packaging machine.

The resultant package was put in cold storage in a refrigerator overnight at 3°C. The appearance of the whole chicken carcass was evaluated, and an amount of the gas in an inside of the package was measured.

The amount of the gas in the inside of the package was determined in such a manner that: the package was submerged in a water tank; a hole was opened in the film and the content was pressed; and a gas leaked out from the package was collected with a measuring cylinder to measure the volume of the gas. In addition, 4 panelists evaluated the appearance (deformation, fitness property) according to the following criteria.

Evaluation criteria; 5: extremely good with no deformation of content due to collapse of abdominal cavity and with fitness property of the film with the content, 4: slight deformation of content and slightly insufficient fitness property, but with no practical problem, 3: deformation of content and insufficient fitness property, 2: considerable deformation of content and insufficient fitness property, 1: significant deformation of content and insufficient fitness property

Table 3 shows the results thereof with those of Comparative Examples.

**[Table 3]**

| | Comparative example 5 | Comparative example 6 | Example 18 | Example 19 | Example 20 | Example 21 | Example 22 | Example 23 | Example 24 | Comparative example 9 | Compara tive example 10 | Comparative example 11 |
|---|---|---|---|---|---|---|---|---|---|---|---|---|
| After packaging (3°C for 1 day) | | | | | | | | | | | | |
| Content weight | 1850 | 1913 | 1825 | 1792 | 1876 | 1690 | 1920 | 1870 | 1840 | 1920 | 1990 | 1680 |
| Gas amount | 5 | 44 | 62 | 90 | 140 | 145 | 182 | 205 | 262 | 313 | 440 | 405 |
| Ratio of gas volume to content weight | 0.3% | 2.3% | 3.4% | 5.0% | 7.5% | 8.6% | 9.5% | 11.0% | 14.2% | 16.3% | 22.1% | 24.1% |
| Evaluation of appearance Deformation, fitness property | 1.7 | 3.3 | 4.3 | 4.8 | 5.0 | 5.0 | 4.8 | 4.5 | 4.0 | 3.0 | 2.0 | 1.0 |
| After storage (3°C for 7 days, after package is opened) | | | | | | | | | | | | |
| Color tone | 5.0 | 5.0 | 5.0 | 4.8 | 4.8 | 4.8 | 4.8 | 4.8 | 4.3 | 4.0 | 3.5 | 3.0 |
| Smell | 5.0 | 5.0 | 5.0 | 4.8 | 4.5 | 4.5 | 4.5 | 4.5 | 4.3 | 3.8 | 3.0 | 3.0 |

### (Reference Examples 25 to 28) (Oxygen gas permeability of packaging material)

In each of pouches (packaging materials of the following items (1) to (4)) produced to have a size of a width 230 mm and a length of 350 mm, a fresh whole chicken carcass (fresh broiler chicken from which feathers and guts were removed (within 24 hours after slaughter), weight of about 2 kg) was put, and the fresh whole chicken carcass was subjected to gas packaging by using a gas mixture of 70% nitrogen and 30% carbon dioxide gas.

An amount of the gas was adjusted so that the gas had a volume (ml) corresponding to about 10% of the content weight (g) 1 day after the packaging. The resultant package was put in a refrigerator and kept in cold storage at 3°C for 7 days, and then appearance of the whole chicken carcass after the package was opened, smell, and a number of bacteria on a surface of the whole chicken carcass were evaluated.

For the appearance, 4 panelists visually observed it under a fluorescent lamp and evaluated it according to the following criteria.

Evaluation criteria; 5: extremely good with pale red to pink color of surface of chicken, 4: slightly dim color tone, but with no practical problem, 3 : pale brown color change (leading to a problem), 2: considerable color change, 1: significant color change

For the smell, 4 panelists smelled the content after the package was opened, and evaluated the smell according to the following criteria.

Evaluation criteria; 5: almost no smell, 4: slight smell but with no practical problem, 3: moderate smell (leading to a problem), 2: considerable smell, 1: significant smell

For the number of bacteria, a certain area of 25 cm² on the content was wiped out after the package was opened, and the number of the bacteria adhered thereon was determined. It was judged that there was a problem when the number of the bacteria exceeded 10⁶ per 25 cm³.
(1) PET/Ny/EVOH/VLDPE (total thickness of 40 µm) (oxygen gas permeability: 20 ml/m²·day·atm at 23°C, 80%RH)
(2) PET/Ny/VLDPE (total thickness of 50 µm) (oxygen gas permeability: 55 ml/m²·day·atm at 23°C, 80%RH)
(3) PET/Ny/VLDPE (total thickness of 30 µm) (oxygen gas permeability: 89 ml/m²·day·atm at 23°C, 80%RH)
(4) PET/Ny/VLDPE (total thickness of 21 µm) (oxygen gas permeability: 169 ml/m²·day·atm at 23°C, 80%RH)

Table 4 shows the results thereof.

**[Table 4]**

| | Reference Example 25 | Reference Example 26 | Reference Example 27 | Reference Example 28 |
|---|---|---|---|---|
| Film | (1) | (2) | (3) | (4) |
| After storage (at 3°C in 7 days, after package is opened) | | | | |
| Color tone | 4.8 | 4.8 | 4.5 | 4.3 |
| Smell | 4.5 | 4.5 | 4.5 | 4.3 |
| Number of bacteria | 4.5x10⁴ | 4.6x10⁴ | 8.8x10⁴ | 1.1x10⁵ |

### (Examples 29 to 31) (Case where heat-shrinkable film was used and heat treatment was performed)

In each of pouches (packaging materials of the following items (1) to (3)) produced to have a size of a width 230 mm and a length of 350 mm, a fresh whole chicken carcass (fresh broiler chicken from which feathers and guts were removed (within 12 hours after slaughter), weight of about 2 kg) was put, and the fresh whole chicken carcass was subjected to gas packaging by using a gas mixture of 20% nitrogen, 30% carbon dioxide gas, and 50% oxygen.

After the packaging, the whole was immersed in hot water at 85°C for 1 second to obtain a package (amount of the gas was adjusted so that the gas had a volume (ml) corresponding to about 10% of the content weight (g) after 1 day after packaging). The resultant package was put in a refrigerator and kept in cold storage at 3°C for 11 days. The appearance (deformation, fitness property) of the package before being opened, appearance of the filmbefore the package was opened, appearance of the content after the package was opened, smell, and a number of bacteria were evaluated.

For the appearance (deformation, fitness property) of the package before being opened, 4 panelists evaluated it according to the following criteria.

Evaluation criteria; 5: extremely good with no deformation of content due to collapse of abdominal cavity and with fitness property of the film with the content, 4: slight deformation of content and slightly insufficient fitness property, but with no practical problem, 3: prominent deformation of content and insufficient fitness property, resulting in a slight problem, 2: considerable deformation of content and insufficient fitness property, 1: significant deformation of content and insufficient fitness property

For the appearance of the film before the package was opened, 4 panelists evaluated it according to the following criteria.

Evaluation criteria; 5: almost no wrinkle with good tension, 4: wrinkle and sag being partly observed, but with no practical problem, 3: prominent wrinkle and sag resulting in a slight problem, 2: considerable wrinkle and sag, 1: significant wrinkle and sag

For the appearance of the content after the package was opened, 4 panelists visually observed it under a fluorescent lamp and evaluated it according to the following criteria.

Evaluation criteria; 5: extremely good with pale red to pink color of surface of chicken, 4: slightly dim color tone, but with no practical problem, 3 : pale brown color change (leading to a problem), 2: considerable color change, 1: significant color change

For the smell, 4 panelists smelled the content after the package was opened, and evaluated the smell according to the following criteria.

Evaluation criteria; 5: almost no smell, 4: slight smell but with no practical problem, 3: moderate smell (leading to a problem), 2: considerable smell, 1: significant smell

For the number of bacteria, a certain area of 25 cm² on the content was wiped out after the package was opened, and the number of the bacteria adhered thereon was determined. It was judged that there was a problem when the number of the bacteria exceeded 10⁶ per 25 cm³.
(1) PET/Ny/EVOH/VLDPE (total thickness of 90 µm) (oxygen gas permeability: 10 ml/m²·day·atm at 23°C, 80%RH, hydrothermal shrinkage at 90°C: MD/TD = 16%/19%)
(2) PET/Ny/EVOH/LLDPE (total thickness of 40 µm) (oxygen gas permeability: 24 ml/m²·day·atm at 23°C, 80%RH, hydrothermal shrinkage at 90°C: MD/TD = 24%/28%)
(3) PET/Ny/EVOH/VLDPE (total thickness of 40 µm) (oxygen gas permeability: 20 ml/m²·day·atm at 23°C, 80%RH, hydrothermal shrinkage at 90°C: MD/TD = 30%/34%)

Note that, the term "MD" regarding the thermal shrinkage indicates a thermal shrinkage in a direction corresponding to a machine direction of a melt extruder upon production of the packaging materials, and the term "TD" indicates a thermal shrinkage in a direction perpendicular to that of MD (transversal direction in a case where the machine direction was provided as a longitudinal direction).

Table 5 shows the results thereof.

**[Table 5]**

| | Example 29 | Example 30 | Example 31 |
|---|---|---|---|
| Packaging material | (1) | (2) | (3) |
| Thermal shrinkage of packaging material at 90°C (MD/TD) | | | |
| | 16%/19% | 24%/18% | 30%/34% |
| ⊚Gas composition upon packaging | | | |
| Gas composition (%) | | | |
| Nitrogen | 20% | 20% | 20% |
| Carbon dioxide gas | 30% | 30% | 30% |
| Oxygen | 50% | 50% | 50% |
| ⊚After storage (at 3° C in 11 days) | | | |
| Gas composition (%) | | | |
| Nitrogen | 53.5% | 54.5% | 53.8% |
| Carbon dioxide gas | 23.7% | 25.6% | 25.2% |
| Oxygen | 22.8% | 19.9% | 21.0% |
| Appearance of package before being opened | 5 | 5 | 5 |
| Appearance of film before package is opened | 4.8 | 5 | 5 |
| Appearance of content after package is opened | 5.0 | 4.8 | 4.8 |
| Smell | 4.5 | 4.5 | 4.3 |
| Number of bacteria | 3.6x10⁴ | 3.0x10⁴ | 4.9x10⁴ |

### (Examples 32 to 34) (Deep drawing packaging using heat-shrinkable film)

A fresh whole chicken carcass was packaged by using as a base material a film as described in the following item (1) and as a cover material a film as described in the following item (2) with a deep drawing packaging machine manufactured by Multivac. There was used a fresh whole chicken carcass (weight: about 1.8 kg) from which feathers and guts thereof had been removed, and which was fresh, that is, within 12 hours from slaughter. In addition, the deep drawing packaging was performed in such a manner that: the whole chicken carcass was placed on a base material which had been formed by deep drawing; an polystyrene paper tray was put on the whole chicken carcass; the whole was subjected to gas exchange sealing; and the cover material was subjected to thermal adhesion. The gas was composed of 80% oxygen and 20% carbon dioxide gas, and the amount of the gas was adjusted so that the gas had a volume (ml) corresponding to 12 to 14% of the content weight (g) 1 day after the packaging. Note that after the packaging, the resultant package was passed through hot tunnels adjusted to be 80°C (Example 32), 90°C (Example 33), and 95 °C (Example 34), respectively, whereby packages each had fitness property were obtained by utilizing thermal shrinkage of the packaging material.

The resultant packages were each put in a refrigerator and kept in cold storage at 3°C for 12 days in a state where the tray was on the downside. The appearance (deformation, fitness property) of the package before being opened, appearance of the film before the package was opened, appearance of the content after the package was opened, smell, and number of the bacteria were evaluated.
(1) co-PET (3 µm)/ad (2.5 µm)/Ny 6-66 (20 µm)/EVOH (7 µm)/ad (2.5 µm)/VLDPE (35 µm) (oxygen gas permeability: 10 ml/m²·day·atm at 23°C, 80%RH, hydrothermal shrinkage MD/TD: 3%/6% at 80°C, 8%/12% at 90°C, 10%/15% at 95°C)
(2) co-PET (1.5 µm)/ad (1 µm)/Ny 6-66 (8 µm)/EVOH (3.5 µm)/ad (1 µm)/VLDPE (15 µm) (oxygen gas permeability: 23 ml/m²·day·atm at 23°C, 80%RH, hydrothermal shrinkage MD/TD: 24%/26% at 80°C, 30%/30% at 90°C, 32%/33% at 95°C)

For the appearance (deformation, fitness property) of the package before being opened, 4 panelists evaluated it according to the following criteria.

Evaluation criteria; 5: extremely good with no deformation of content due to collapse of abdominal cavity and with fitness property of the film with the content, 4: slight deformation of content and slightly insufficient fitness property, but with no practical problem, 3: prominent deformation of content and insufficient fitness property, resulting in a slight problem, 2: considerable deformation of content and insufficient fitness property, 1: significant deformation of content and insufficient fitness property

For the appearance of the film before the package was opened, 4 panelists evaluated it according to the following criteria.

Evaluation criteria; 5: almost no wrinkle with good tension, 4: wrinkle and sag being partly observed, but with no practical problem, 3: prominent wrinkle and sag, resulting in a slight problem, 2: considerable wrinkle and sag, 1: significant wrinkle and sag

For the appearance of the content after the package was opened, 4 panelists visually observed it under a fluorescent lamp and evaluated it according to the following criteria.

Evaluation criteria; 5: extremely good with pale red to pink color of surface of chicken, 4: slightly dim color tone, but with no practical problem, 3 : pale brown color change (leading to a problem), 2: considerable color change, 1: significant color change

For the smell, 4 panelists smelled the content after the package was opened, and evaluated the smell according to the following criteria.

Evaluation criteria; 5: almost no smell, 4: slight smell but with no practical problem, 3: moderate smell (leading to a problem), 2: considerable smell, 1: significant smell

For the number of bacteria, a certain area of 25 cm² on the content was wiped out after the package was opened, and the number of the bacteria adhered thereon was determined. It was judged that there was a problem when the number of the bacteria exceeded 10⁶ per 25 cm³.

Table 6 shows the results thereof.

**[Table 6]**

| | Example 32 | Example 33 | Example 34 |
|---|---|---|---|
| Heat treatment temperature | 80°C | 90°C | 95°C |
| ⊚Gas composition upon packaging | | | |
| Gas composition (%) | | | |
| Nitrogen | 0% | 0% | 0% |
| Carbon dioxide gas | 20% | 20% | 20% |
| Oxygen | 80% | 80% | 80% |
| ⊚Thermal shrinkage at the heat treatment temperature of packaging material (MD/TD) | | | |
| (1) Base material | 3%/6% | 8%/12% | 10%/15% |
| (2) Cover material | 24%/26% | 30%/30% | 32%/33% |
| ⊚After storage (at 3°C in 12 days) | | | |
| Gas composition (%) | | | |
| Nitrogen | 18.0% | 18.0% | 17.2% |
| Carbon dioxide gas | 31.9% | 32.5% | 32.0% |
| Oxygen | 50.1% | 49.5% | 50.8% |
| Appearance of package before being opened | 5 | 5 | 5 |
| Appearance of film before package is opened | 4.5 | 5 | 5 |
| Appearance of content after package is opened | 4.5 | 4.5 | 4.5 |
| Smell | 4.5 | 4.5 | 4.5 |
| Number of bacteria | 1.7x10⁵ | 8.1x10⁴ | 6.9x10⁴ |

## Claims

1. A package for a lump of meat having a void within an inside thereof, comprising:
a lump of meat having a void within an inside thereof; and
a gas mixture of at least 2 kinds of gas, which has a volume (ml) corresponding to 3% or more and 15% or less of a weight (g) of the lump of meat and, after storage of the package at 3°C for 7 days, has a carbon dioxide gas concentration of 8% or more and 90% or less, and an oxygen concentration of 5% or more and 70% or less, the lump of meat and the gas mixture being packaged in a tightly sealed manner.

2. A package for a lump of meat having a void within an inside thereof according to claim 1, wherein the lump of meat having a void within an inside thereof is obtained by removing feathers and guts from one fowl selected from the group consisting of chicken, turkey, duck, and goose.

3. A package for a lump of meat having a void within an inside thereof according to any one of claims 1 or 2, wherein the lump of meat having a void within an inside thereof and the gas mixture are packaged in a tightly sealed manner and in close contact with a packaging material.

4. A package for a lump of meat having a void within an inside thereof according to claim 3, wherein the packaging material comprises a heat-shrinkable film.

5. A package for a lump of meat having a void within an inside thereof according to claim 4, wherein the heat-shrinkable film has a shrinkage at 90°C of 15% or more.

6. A package for a lump of meat having a void within an inside thereof according to any one of claims 1 to 5, wherein the packaging material has an oxygen gas permeability at 23°C and 80% RH of 200 ml/m² day atm or less wherein 1 atm corresponds to 1.0133·10⁵ Pa.

7. A package for a lump of meat having a void within an inside thereof according to claim 3, wherein the packaging material comprises at least a material including a layer formed of polyamide and a layer formed of polyolefin.

8. A method of producing a package for a lump of meat having a void within an inside thereof according to claim 1, the method comprising:
tightly sealing a lump of meat having a void within an inside thereof and a gas mixture of at least 2 kinds of gas, which has a volume (ml) corresponding to 3% or
more and 30% or less of a weight (g) of the lump of meat, a carbon dioxide gas concentration of 15% or more and 91% or less and an oxygen concentration of 4% or
more and 75% or less with a packaging material; and
subjecting the packaging material to heat shrinkage at an ambient temperature of 75°C or more.

9. A method of producing a package for a lump of meat having a void within an inside thereof according to claim 8, wherein the packaging material comprises a heat-shrinkable film.

## Patentansprüche

1. Verpackung für ein einen Hohlraum in einem Inneren hiervon aufweisendes Fleischstück, Folgendes beinhaltend:
ein einen Hohlraum in einem Inneren hiervon aufweisendes Fleischstück; und
eine Gasmischung aus mindestens zwei Gasarten, welche ein Volumen (ml) besitzt, welches 3 % oder mehr und 15 % oder weniger eines Gewichts (g) des Fleischstücks entspricht, und, nach Lagerung der Verpackung bei 3° C über 7 Tage, eine Kohlendioxidkonzentration von 8 % oder darüber, und von 90 % oder darunter besitzt, und eine Sauerstoffkonzentration von 5 % oder darüber, und von 70 % oder darunter, wobei das Fleischstück und die Gasmischung in einer dicht verschlossenen Weise verpackt sind.

2. Verpackung für ein einen Hohlraum in einem Inneren hiervon aufweisendes Fleischstück nach Anspruch 1, wobei das Fleischstück, welches einen Hohlraum in dessen Innerem besitzt, durch Beseitigen von Federn und Innereien von einem Vogel erzielt wird, ausgewählt aus der Gruppe, bestehend aus Huhn, Truthahn, Ente und Gans.

3. Verpackung für ein einen Hohlraum in einem Inneren hiervon aufweisendes Fleischstück nach einem der Ansprüche 1 oder 2, bei welchem das Fleischstück, welches einen Hohlraum in dessen Innerem besitzt, und die Gasmischung in einer dicht verschlossenen Weise und in engem Kontakt mit einem Verpackungsmaterial verpackt sind.

4. Verpackung für ein einen Hohlraum in einem Inneren hiervon aufweisendes Fleischstück nach Anspruch 3, bei welchem das Verpackungsmaterial eine wärmeschrumpfbare Folie beinhaltet.

5. Verpackung für ein einen Hohlraum in einem Inneren hiervon aufweisendes Fleischstück nach Anspruch 4, bei welchem die wärmeschumpfbare Folie bei 90 °C eine Schrumpfung von 15 % oder darüber aufweist.

6. Verpackung für ein einen Hohlraum in einem Inneren hiervon aufweisendes Fleischstück nach einem der Ansprüche 1 bis 5, bei welchem das Verpackungsmaterial eine Sauerstoff-Gaspermeabilität bei 23°C und bei 80 % relativer Luftfeuchte von 200 ml/m²Tag atm oder darunter besitzt, wobei 1 atm 1.0133·10⁵ Pa entspricht.

7. Verpackung für ein einen Hohlraum in einem Inneren hiervon aufweisendes Fleischstück nach Anspruch 3, bei welchem das Verpackungsmaterial mindestens ein Material beinhaltet, welches eine aus Polyamid gebildete Schicht und eine aus Polyolefin gebildete Schicht enthält.

8. Verfahren zur Herstellung einer Verpackung für ein einen Hohlraum in einem Inneren hiervon aufweisendes Fleischstück nach Anspruch 1, bei welchem das Verfahren folgende Schritte beinhaltet:
dichtes Verschließen eines einen Hohlraum in einem Inneren hiervon aufweisenden Fleischstücks, und einer Gasmischung aus mindestens zwei Gasarten, welche ein Volumen (ml) besitzt, welches 3 % oder mehr und 30 % oder weniger eines Gewichts (g) des Fleischstücks entspricht, eine Kohlendioxidkonzentration von 15 % oder darüber, und von 91 % oder darunter besitzt, und eine Sauerstoffkonzentration von 4 % oder darüber, und von 75 % oder darunter besitzt, mit einem Verpackungsmaterial; und
Unterwerfen des Verpackungsmaterials einer Wärmeschrumpfung bei einer Umgebungstemperatur von 75 °C oder darüber.

9. Verfahren zur Herstellung einer Verpackung für ein einen Hohlraum in einem Inneren hiervon aufweisendes Fleischstück nach Anspruch 8, bei welchem das Verpackungsmaterial wärmeschumpfbare Folie beinhaltet.

## Revendications

1. Conditionnement pour un morceau de viande présentant un vide au sein d'un intérieur de celui-ci, comprenant :
un morceau de viande présentant un vide au sein d'un intérieur de celui-ci ; et
un mélange de gaz constitué d'au moins deux sortes de gaz, qui présente un volume (en ml) supérieur ou égal à 3 % et inférieur ou égal à 15 % d'un poids (en g) du morceau de viande et qui, après stockage du conditionnement à 3°C pendant 7 jours, présente une concentration en gaz dioxyde de carbone supérieure ou égale à 8 % et inférieure ou égale à 90 %, et une concentration en oxygène supérieure ou égale à 5 % et inférieure ou égale à 70 %, le morceau de viande et le mélange de gaz étant conditionné de manière hermétiquement étanche.

2. Conditionnement pour un morceau de viande présentant un vide au sein d'un intérieur de celui-ci selon la revendication 1, dans lequel le morceau de viande présentant un vide au sein d'un intérieur de celui-ci est obtenu en retirant des plumes et des boyaux d'une volaille sélectionnée parmi le groupe constitué de poulet, dinde, canard, et oie.

3. Conditionnement pour un morceau de viande présentant un vide au sein d'un intérieur de celui-ci selon l'une quelconque des revendications 1 ou 2, dans lequel le morceau de viande présentant un vide au sein d'un intérieur de celui-ci et le mélange de gaz sont conditionnés de manière hermétiquement étanche et en contact étroit avec un matériau de conditionnement.

4. Conditionnement pour un morceau de viande présentant un vide au sein d'un intérieur de celui-ci selon la revendication 3, dans lequel le matériau de conditionnement comprend un film thermorétractable.

5. Conditionnement pour un morceau de viande présentant un vide au sein d'un intérieur de celui-ci selon la revendication 4, dans lequel le film thermorétractable présente un retrait à 90°C qui est supérieur ou égal à 15 %.

6. Conditionnement pour un morceau de viande présentant un vide au sein d'un intérieur de celui-ci selon l'une quelconque des revendications 1 à 5, dans lequel le matériau de conditionnement présente une perméabilité à l'oxygène à 23°C et 80 % d'humidité relative qui est inférieure ou égale à 200 ml/m².jour.atm, une atmosphère (atm) correspondant à 1,0133·10⁵ Pa.

7. Conditionnement pour un morceau de viande présentant un vide au sein d'un intérieur de celui-ci selon la revendication 3, dans lequel le matériau de conditionnement comprend au moins un matériau comprenant une couche formée de polyamide et une couche formée de polyoléfine.

8. Procédé de production d'un conditionnement pour un morceau de viande présentant un vide au sein d'un intérieur de celui-ci selon la revendication 1, le procédé comprenant les étapes consistant à :
enfermer de manière hermétiquement étanche un morceau de viande présentant un vide au sein d'un intérieur de celui-ci et un mélange de gaz constitué d'au moins deux sortes de gaz, qui présente un volume (en ml) supérieur ou égal à 3 % et inférieur ou égal à 30 % d'un poids (en g) du morceau de viande, une concentration en gaz dioxyde de carbone supérieure ou égale à 15 % et inférieure ou égale à 91 % et une concentration en oxygène supérieure ou égale à 4 % et inférieure ou égale à 75 %, avec un matériau de conditionnement ; et
soumettre le matériau de conditionnement à une thermorétraction à une température ambiante supérieure ou égale à 75°C.

9. Procédé de production d'un conditionnement pour un morceau de viande présentant un vide au sein d'un intérieur de celui-ci selon la revendication 8, dans lequel le matériau de conditionnement comprend un film thermorétractable.
